# EUROPEAN PATENT APPLICATION

(11) **EP 1 103 390 A1**
(43) Date of publication of application: **30.05.2001**
(21) Application number: 99203946.1
(22) Date of filing: 23.11.1999
(51) Int. Cl.: B60C 15/04, B29D 30/48

(54) **Steel wire bead for tyres**

(71) Applicant: Bekaert Naamloze Vennootschap, 8550 Zwevegem (BE)
(72) Inventor: Dambre, Paul, 8956 Kemmel (BE)
(74) Representative: Messely, Marc

(57) **Abstract**

A bead reinforcement structure (10) has at least one steel wire which makes several windings which build several layers, amongst which a radially inner layer and a radially outer layer. Each of said layers are built of one or more of windings so as to form a polygonal cross-sectional from The wire has a leading end (23) and a trailing end. The leading end (23) and the trailing end are positioned in a winding different from the left (22) or right winding (20) of the radially most inner layer.

## Description

### Field of the invention.

The present invention relates to a bead reinforcement structure of a single steel wire which makes several windings. The windings build several layers, amongst which a radially inner layer and a radially outer layer. Each of the layers is built of one or more of these windings. All the layers form a polygonal cross-sectional form
The present invention also relates to an apparatus for and a method of manufacturing such a bead reinforcement structure.

### Background of the invention.

Such bead reinforcement structures are widely known in the art as single wire bead reinforcement structures.

Nevertheless, these widely known single wire bead reinforcement structures have some considerable disadvantages.

A first main disadvantage is that in a great number of cases the bead reinforcement structure breaks long before its expected lifetime. And even in case they do not break, investigation of bead reinforcement structures of used tires reveals very often shape changes of the bead.

Another second disadvantage is that single wire bead reinforcement structures loose typically around 25 % of their theoretical strength.

A third and somewhat related disadvantage is that the steel wire conveniently has up to 7 % elongation in order to compensate for the differences in loading of the various layers. This high degree of elongation is only reached after a heat treatment applied to the final steel wire. Such heat treatment, however, causes a substantial loss in tensile strength, which, in its turn, necessitates the use of more steel weight than in case such elongation is not required.

EP-A-0 856 422 discloses a way where the single wire bead reinforcement structure is made up of a steel wire with only an elongation at fracture of maximum 2.5 %.

However, this type of steel wire requires a more complicated way of manufacturing the bead reinforcement structure in order to solve the second problem mentioned above.
And this single wire bead reinforcement structure does not solve the first and main problem mentioned above.

### Summary of the invention.

According to the invention there is provided a bead reinforcement structure of at least one steel wire (e.g. only one single steel wire) which makes several windings. The several wires build several layers, amongst which a radially inner layer and a radially outer layer. Each of said layers are built of one or more of these windings so as to form a polygonal cross-sectional form. The steel wire has a leading end and a trailing end.
The leading end and the trailing end of the steel wire are positioned in a winding different from the left or right winding of the radially most inner layer of the bead reinforcement structure.

Preferably the leading end or the trailing end are positioned in the radially upper layer and most preferably, both the leading end and the trailing end are positioned in the radially upper layer. In this preferable embodiment the ends of the steel wire can no longer exert a transversal force on wires which lie above these ends, since there are no such wires.
As will be explained hereafter, this reduction of transversal forces reduces considerably the frequency of fractures in a bead reinforcement structure.
This reduction of transversal forces also makes it possible to increase the diameter of the steel wire. And this increase in diameter makes it possible to make structures with less windings and less layers than the prior art structures.

As a matter of example only, according to the invention it is possible to replace a conventional 4 x 4 x 0.89 mm structure by :
a 2 x 2 x 1.80 mm structure ; or
a 2 x 3 x 1.50 mm structure.
This reduction in number of windings and in number of layers also leads to a better distribution of the forces amongst the layers.

In an advantageous embodiment of the invention the steel wire making up the steel reinforcement structure has a flattened cross-section.

In another advantageous embodiment of the invention, the steel wire no longer needs to be surrounded by a layer of rubber.
However, rubber is not totally excluded in the frame work of the present invention, but its volume or thickness may be limited. For example in case the steel wire has a coextruded layer of rubber, the thickness of the rubber layer may be limited to 0,50 mm.
Conventional rubbers may be used or, preferably, rubbers with an increased hardness.

In other embodiments of the invention, the steel wire has a total elongation at fracture of maximum 2.5 % and can have a tensile strength above 3100 - 600 x d MPa wherein d is the wire diameter expressed in millimeter. This means that the additional step of stress-relieving may be canceled.

As to the polygonal form of the cross-section, the bead reinforcement according to the invention preferably as a hexagonal cross-section.

The invention also relates to an apparatus for and a method of manufacturing a bead reinforcement structure as described above.

Other advantageous effects of the invention will be explained hereinafter in the description relating to the figures.

### Brief description of the drawings.

The invention will now be described into more detail with reference to the accompanying drawings wherein
- FIGURE 1 shows in a schematic way how a prior art bead reinforcement structure is built in a tire ;
- FIGURE 2 shows a schematic drawing of a prior art bead reinforcement structure;
- FIGURE 3 illustrates how the leading end of the wire of the first winding acts against a wire of a subsequent layer;
- FIGURE 4 shows a load elongation diagram of a bead reinforcement structure according to the prior art ;
- FIGURE 5 shows a bead reinforcement structure according to the invention;
- FIGURE 6 shows an example of a cross-section of a bead reinforcement structure according to the invention ;
- FIGURE 7 shows another example of a cross-section of a bead reinforcement structure according to the invention ;
- FIGURE 8 shows a load elongation diagram of a bead reinforcement structure according to the invention.

### Description of the prior art.

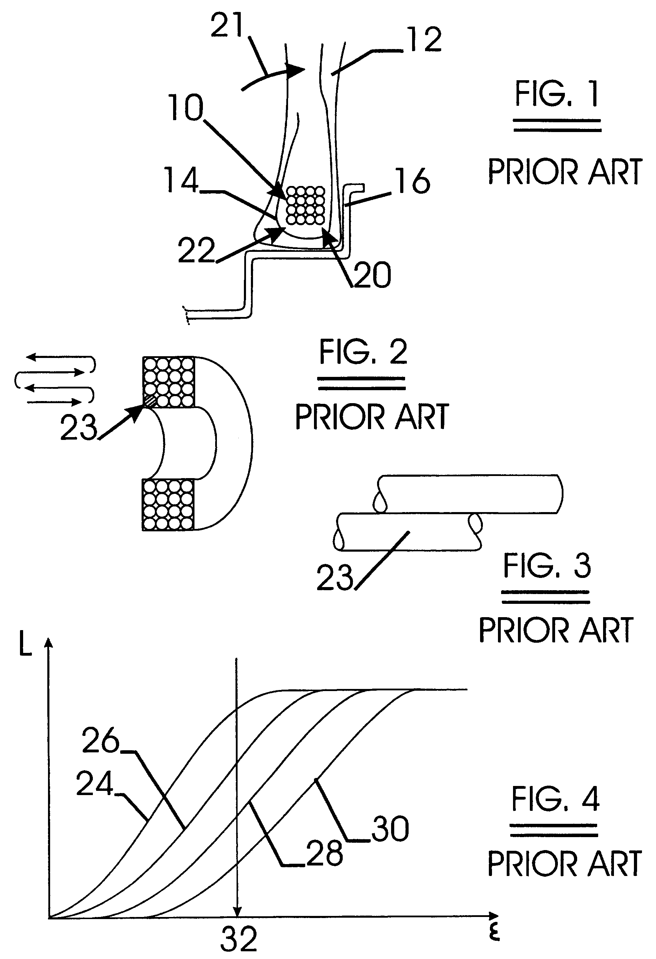

FIGURE 1 illustrates how a bead reinforcement structure is built in a tire. A single wire bead reinforcement structure 10 reinforces the bead 12 of a radial truck tire. A ply of carcass cords 14 surrounds the bead reinforcement structure 10. The function of the bead reinforcement structure 10 is to anchor the tire on rim 16. Forces on the rim are exercised during mounting of the tire on the rim 16. This results in high stresses in zone 20. Another type of forces, mainly bending forces caused by the carcass cords 14 and illustrated by arrow 21, are exercised on the bead reinforcement structure during inflating of the tire and cause stresses which are at their maximum in zone 22.

Referring to FIGURE 2 and FIGURE 3, the forces are very high in the area where the leading end 23 of the steel wire is positioned. This leading end necessarily creates a discontinuity and high transverse forces. Ninety per cent of all the bead reinforcement failures occur in the zone of the leading end.

Another disadvantage of a prior art bead reinforcement is illustrated in FIGURE 4. FIGURE 4 gives a schematic diagram of load elongation curves of a prior art bead reinforcement. The first layer of the bead reinforcement structure, i.e. the radially innermost layer, starts with taking up the initial forces. This is illustrated by curve 24. The second layer, illustrated by curve 26, only starts up taking loads after the applied strain has reached a certain level. The same is true for the third layer, illustrated by curve 28, and for the fourth layer, illustrated by curve 30. For an applied strain at level 32, this means that the different layers take up completely different levels of load. The first and radially inner layer takes up the highest level, while the fourth and radially outer layer takes up the lowest level. Prior art bead reinforcement structures loose in this way some 25% of their theoretical strength. This loss still increases with the thickness of the rubber which is conveniently coextruded around the steel wire.
Moreover, in order to be able to still take up loads at a moment the fourth layer is starting to take up loads, the steel wire needs to have a great elongation of 7%. As already mentioned hereabove, this great elongation is only obtained after a heat treatment which causes the tensile strength to decrease drastically.

### Description of the preferred embodiments of the invention.

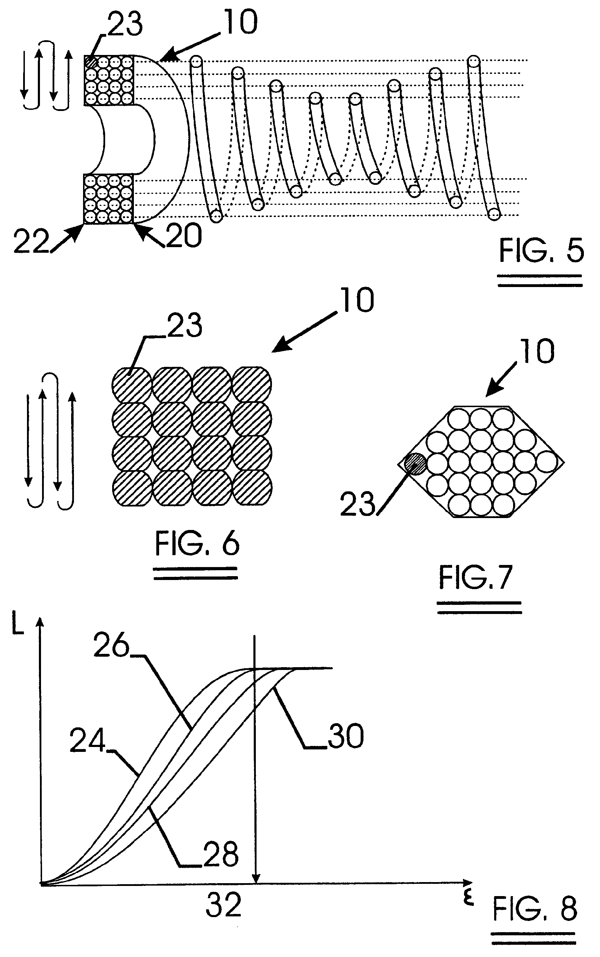

FIGURE 5 schematically shows a bead reinforcement structure 10 according to the invention.
The leading end 23 of the steel wire is positioned in the radially outermost layer. As a consequence, it is not positioned in the most critical zones 20 and 22. The critical zones no longer comprise a discontinuity as illustrated in FIGURE 3 and less fractures occur in these zones.

A bead reinforcement structure according to the invention can be manufactured as follows. A wire rod with a carbon content greater than 0.60 per cent by weight (%), preferably ranging between 0.70 and 0.98 % is chosen as start material. A suitable rod composition is as follows : 0.82 % C, 0.52 % Mn, 0.23 % Si, and maximum sulphur and phosphorous contents of 0.02 %, the balance being iron and unavoidable impurities. Micro-alloying elements such as chromium, however, may be added in order to decrease the necessary degree of drawing reduction. The wire rod is cold drawn in a conventional way to its final diameter. Depending upon the starting diameter of the wire rod and upon the final diameter, intermediate patenting treatments may be necessary. The more remote the final diameter from the staring wire rod diameter, the more likely an intermediate patenting treatment is. Having reached the final diameter, a bronze or brass plating is applied to the steel wire in order in a chemical or an electro-chemical way. A stress-relieving treatment to increase the elongation at fracture above 5% is not necessarily applied to the steel wire.
Conventional final diameters of the steel wire are 0.89 mm, 0.96 mm, 1.30 mm, 1.55 mm, 1.60 mm and 1.82 mm. However, the present invention allows for thicker steel wires, i.e. steel wires with a diameter above 1.90 mm.

The final steel wire may be flattened somewhat.

Further on, the manufacturing method follows the way of making a telescopic spring. The term "telescopic spring" here refers to a spring with a varying diameter of the windings. The varying diameter of the windings is obtained by controlled mechanical preforming of the steel wire. For a 1x16 square bead reinforcement structure, a start is made with a large diameter of the "spring", corresponding to the diameter of the radially outermost layer. Further on the diameter of the spring is continuously decreased in four windings until the diameter of the radially innermost layer is reached. From here on, the diameter of the "spring" is increased again in four windings until the diameter of the radially outermost layer is again reached. This process is repeated again for the remaining eight windings. After the making of this spring-like structure, this structure is axially pressed so that a compact square cross-section is obtained. The various windings and layers may be bonded to each other in different ways :
- by using mechanical clips ;
- by using adhesives;
- by using cumar;
- by enveloping the structure with one or more nylon filaments...

Another possible way of manufactuting a bead reinforcement structure according to the invention is by winding the steel wire on a drum machine which is provided with helixes with varying diameter.

FIGURE 6 illustrates a preferable embodiment of the present invention. Bead reinforcement structure 10 is made up of a single steel wire 32 with a flattened cross-section. This flattening results in a better distribution of the loads between various layers and in a more efficient use of the available steel material. Moreover, a rubber coating is not even required between the flat sides of the wire in the various layers. Only a thin rubber like material may be appropriate between the rounded sides of neighboring cross-section of the wire.

A bead reinforcement structure according to the invention is not limited to a square or rectangular cross-section. A hexagonal cross-section, as illustrated in FIGURE 7, may be more appropriate to take up the bending forces exercised by the carcass cords. The leading end 23 of the steel wire may be positioned in the third layer.

The more efficient use of the present and available steel material in a bead reinforcement structure according to the invention leads to load elongation curves of the subsequent layers 24, 26, 28 and 30, which lie closer to each other in comparison with a single wire bead reinforcement structure of the prior art. This is illustrated in FIGURE 8. For an applied strain 32, the various layers are more balanced and take up more equal loads, which leads to an increased lifetime.

## Claims

1. A bead reinforcement structure of at least one steel wire which makes several windings, said windings building several layers, amongst which a radially inner layer and a radially outer layer, each of said layers being built of one or more of said windings so as to form a polygonal cross-sectional form, said wire have a leading end and a trailing end, characterized in that the leading end and the trailing end are positioned in a winding different from the left or right winding of the radially most inner layer.

2. A structure according to claim 1, wherein said leading end or said trailing end are positioned in the radially upper layer.

3. A structure according to claim 1 or claim 2, wherein both said leading end and said trailing end are positioned in the radially upper layer.

4. A structure according to any one of the preceding claims, wherein said steel wire has a flattened cross-section.

5. A structure according to any one of the preceding claims wherein said steel wire has a coextruded layer of rubber with a thickness smaller than 0,50 mm.

6. A structure according to any one of the preceding claims wherein said steel wire has a total elongation at fracture of maximum 2.5 %.

7. A structure according to any one of the preceding claims wherein said steel wire has a tensile strength above 3100 - 600 x d MPa, d being the wire diameter expressed in millimeter.

8. A structure according to any one of the preceding claims, said structure having a hexagonal cross-section.

9. An apparatus for manufacturing a structure according to any one of the preceding claims, said apparatus comprising :
a) means for preforming said steel wire so that a varying and controlled radius of curvature is obtained in several windings formed by the preformed steel wire ;
b) means for compacting said preformed steel wire in a compact structure.

10. An apparatus according to claim 9, said apparatus further comprising means for bonding said compact structure.

11. An apparatus according to claim 10, said apparatus further comprising means for inserting rubber between windings of the steel wire.

12. A method of manufacturing a structure according to any one of claims 1 to 8, said method comprising the steps of :
a) preforming said steel wire so that a varying and controlled radius of curvature is obtained in several windings formed by the preformed steel wire;
b) compacting said preformed steel wire in a compact structure.

13. A method according to claim 12, said method further comprising the step of bonding said compact structure.

14. A method according to claim 13, said method further comprising the step of inserting rubber between windings of the steel wire.
